# EUROPEAN PATENT APPLICATION

(11) **EP 2 594 491 A1**
(43) Date of publication of application: **22.05.2013**
(21) Application number: 11806479.9
(22) Date of filing: 12.07.2011
(51) Int. Cl.: B65B 51/10, B32B 27/00, B32B 27/32, B65D 75/12, B65D 30/02

(54) **FILLING METHOD, PROCESS FOR PRODUCING SMALL BAG PACKAGE OF LIQUID, AND SMALL BAG PACKAGE OF LIQUID**

(30) Priority: 16.07.2010 JP 2010162020
(71) Applicant: Du Pont-Mitsui Polychemicals Co., Ltd., Tokyo 105-7117 (JP)
(72) Inventor: SAKAMOTO, Yuu, Ichihara-shi Chiba 299-0108 (JP); SAITO, Noritsugu, Ichihara-shi Chiba 299-0108 (JP); MAKI, Nobuyuki, Ichihara-shi Chiba 299-0108 (JP)
(74) Representative: Gulde Hengelhaupt Ziebig & Schneider
(86) International application number: PCT/JP2011/003977
(87) International publication number: WO 2012/008145

(57) **Abstract**

The invention is a filling method in which liquid is filled and sealed into a liquid sachet package made of a multilayered laminate having at least three layers in which a base material which forms a surface layer, an intermediate layer, and a sealant layer which forms an internal layer are laminated in the above order, including
a process of forming a liquid sachet package, a process of filling liquid, and a process of sealing in the opening of the liquid sachet package, in which the intermediate layer is formed using a composition including an ionomer of an ethylene and unsaturated carboxylic acid copolymer, and a filling temperature range obtained using a specific method becomes equal to or more than 30°C at both a line speed of 20 m/minute and a line speed of 25 m/minute.

## Description

### TECHNICAL FIELD

The present invention relates to a filling method, a manufacturing method of a liquid sachet package, and a liquid sachet package.

### BACKGROUND ART

As a material of a pouch package which encases liquid, viscous bodies, solids and the like, a multilayered laminate obtained by laminating various types of an intermediate layer and a sealant layer on a base material according to necessity is widely used. Since the sealant layer in the multilayered laminate has heat-sealing properties, contents can be sealed by heat-sealing the opening portion of the pouch that encases the contents.

For example, Patent Document 1 describes a package for which a multilayered laminate obtained by laminating an intermediate layer and a sealant layer on a base material is used.

In addition, in a package into which liquid-phase contents are filled and which is heat-sealed, there were cases in which the contents remaining in the heat-sealing portion are heat-sealed together with the sealant layer, expand and release bubbles due to the pressure and heat, thereby causing poor sealing. Meanwhile, when the heat sealing temperature is decreased, there were cases in which non-melting portions are generated in the heat-sealing portion such that the sealing strength decreases and liquid leakage occurs (refer to Patent Document 2).

### RELATED DOCUMENT

### PATENT DOCUMENT

[Patent Document 1] Japanese Laid-open Patent Publication No. 2000-202956
[Patent Document 2] Japanese Laid-open Patent Publication No. 2007-204628

### DISCLOSURE OF THE INVENTION

However, in a case in which the multilayered laminate as described in the above patent documents is used, the method of filling the liquid-phase contents is not sufficiently optimized, and there was room for improvement.

The present inventors found that a filling method with a higher degree of productivity can be obtained by filling liquid-phase contents into a liquid sachet package made of a multilayered laminate having a specific filling temperature range.

That is, according to the invention,
a filling method in which liquid is filled and sealed into a liquid sachet package made of a multilayered laminate having at least three layers in which a base material which forms a surface layer, an intermediate layer, and a sealant layer which forms an internal layer are laminated in the above order, including
a process of forming a liquid sachet package by overlapping the multilayered laminate in a manner in which a surface of the sealant layer is made to face each other, and performing heat-sealing of a portion which forms a circumferential edge portion of the liquid sachet package,
a process of filling liquid through an opening of the liquid sachet package, and
a process of sealing a heat-sealing portion in the opening of the liquid sachet package filled with the liquid through heat sealing,
in which the intermediate layer is formed using a composition including an ionomer of an ethylene and unsaturated carboxylic acid copolymer, and
a filling temperature range obtained using a method described below becomes equal to or more than 30°C at both a line speed of 20 m/minute and a line speed of 25 m/minute is provided.

### (Method)

Under conditions that the thickness of the base material is made to be 5 µm to 60 µm, the thickness of the intermediate layer is made to be 5 µm to 50 µm, the thickness of the sealant layer is made to be 5 µm to 50 µm, the total thickness is made to be equal to or less than 100 µm, water at a liquid temperature of 30°C is filled through the opening of the liquid sachet package, and the heat-sealing portion in the opening of the liquid sachet main body is heat-sealed at an arbitrary heat-sealing temperature using DANGAN TYPE-III (manufactured by Taisei Lamick Co., Ltd.) under conditions of a line speed set to 20 m/minute or 25 m/minute, a left pressure of the sealing roll set to 270 kPa, and a right pressure set to 230 kPa. It should be noted that, the heat sealing temperature is changed in intervals of 5°C;
in the heat-sealing portion in the opening of the liquid sachet main body, the heat sealing temperature (the upper limit temperature) immediately before bubbles occur and the heat sealing temperature (the lower limit temperature) at which the liquid sachet main body passes a pressure-resistance test in which a load of 100 kgf is applied for one minute without leakage and pouch break are measured respectively, and the difference between the upper limit temperature and the lower limit temperature is computed as the filling temperature range (°C).
According to the invention, a filling method with a higher degree of productivity can be provided.

### BRIEF DESCRIPTION OF THE DRAWINGS

The above object, other objects, characteristics, and advantages will be further clarified using a preferable embodiment described below and the following accompanying drawings.

FIG. 1 is a schematic cross-sectional view showing a multilayered laminate of the present embodiment.
FIG. 2 is a schematic process chart showing a sequence of a filling method of the embodiment.

### DESCRIPTION OF EMBODIMENTS

Hereinafter, an embodiment of the invention will be described.

### (Multilayered laminate)

A multilayered laminate of the present embodiment is made of at least three layers in which a base material which forms the surface layer, an intermediate layer, and a sealant layer which forms an internal layer are laminated in the above order. The multilayered laminate preferably has a film shape, a sheet shape, a thin film shape, or the like.

The base material forms the surface layer of a liquid sachet package. Thereby, the barrier properties, impact resistance, pinhole resistance, and the like of the liquid sachet package are obtained.

Examples of the base material include films containing one layer of film such as a film in which polyamide, polyester, an ethylene and vinyl alcohol copolymer, polyvinyl alcohol, polyacrylonitrile, polypropylene, a propylene and α-olefin copolymer, polyethylene, an ethylene and α-olefin copolymer, poly-4-methyl-1-pentene, vinyl polychloride, or the like is used, an evaporated film such as an aluminum foil, an aluminum evaporated film, silica, alumina, or magnesia, or the like.

The base material may have a single layer or a multilayer configuration constituted by two or more layers. In addition, in a case in which the base material is a film, the base material may be a monoaxially or biaxially-stretched film. Examples thereof include films laminated by dry-laminating polyester on a polyamide film, co-extruded films of polyamide and an ethylene and vinyl alcohol copolymer, and films laminated by dry-laminating an evaporated polyester film on a polyamide film.
The thickness of the base material is preferably 5 µm to 60 µm, and more preferably 10 µm to 50 µm. In the embodiment, it is possible to reduce the weight and costs of the liquid sachet package by using the above base material layer.

The intermediate layer is formed between the base material and the sealant layer. Thereby, adhesion properties to the base material and tearing properties can be obtained, a decrease in the thickness of the sealant layer is prevented, and heat-sealing properties can be improved. In addition, the intermediate layer is formed using a composition including an ionomer of an ethylene and unsaturated carboxylic acid copolymer.

The ethylene and unsaturated carboxylic acid copolymer is a copolymer containing an unsaturated carboxylic acid at a content of preferably 1 weight% to 25 weight%, particularly preferably 3 weight% to 23 weight%, and more preferably 4 weight% to 20 weight%. When the content of the unsaturated carboxylic acid is equal to or more than the lower limit value, easy lateral cracking properties can be obtained, and, when the content of the unsaturated carboxylic acid is equal to or less than the upper limit value, humidity absorption can be suppressed, whereby favorable moldability can be obtained. In addition, the copolymer may be a multi-component copolymer in which other monomers are arbitrarily copolymerized as well as the two-component copolymer of ethylene and an unsaturated carboxylic acid.

Examples of the unsaturated carboxylic acid include acrylic acid, methacrylic acid, ethacrylic acid, maleic acid, fumaric acid, itaconic acid, maleic anhydride, itaconic anhydride, monomethyl maleate, monoethyl maleate, and the like. Acrylic acid or methacrylic acid is particularly preferable.

Examples of the other monomers that may be arbitrarily copolymerized include vinyl esters such as vinyl acetate and vinyl propionate, unsaturated carboxylic esters such as methyl acrylate, ethyl acrylate, isopropyl acrylate, isobutyl acrylate, n-butyl acrylate, isooctyl acrylate, 2-ethylhexyl acrylate, methyl methacrylate, ethyl methacrylate, isobutyl methacrylate, dimethyl maleate, and diethyl maleate, carbon monoxide, sulfur dioxide, and the like.

The other monomers may be copolymerized in a range of preferably 0 weight% to 30 weight% and more preferably 0 weight% to 20 weight%. When the content of the other monomers is equal to or less than the upper limit value, a multilayered laminate having a favorable balance between strength and tearing properties can be obtained. Such a copolymer may be modified using an unsaturated carboxylic acid or an anhydride thereof, and then used.

As the ionomer, it is possible to use an ionomer in which preferably 10 mol% to 100 mol% of the carboxylic acid in the copolymer and particularly preferably 15 mol% to 80 mol% of the carboxylic acid in the copolymer is neutralized using a metal ion. When the carboxylic acid is neutralized using a metal ion, favorable tearing properties can be obtained.

As the metal ion, an alkali metal such as lithium, sodium, or potassium, an alkaline earth metal such as magnesium or calcium, zinc, or the like can be used, and lithium, sodium, potassium, magnesium, or zinc is particularly preferably used. Thereby, a multilayered laminate which can improve productivity can be obtained.

The melt flow rate of the intermediate layer at 190°C under a load of 2160 g is preferably 0.1 g/10 minutes to 50 g/10 minutes, and more preferably 0.5 g/10 minutes to 20 g/10 minutes from the viewpoint of the moldability of the multilayered laminate or favorable properties of the multilayered laminate.

The thickness of the intermediate layer is preferably 5 µm to 50 µm, and more preferably 10 µm to 25 µm. In the present embodiment, since the thickness can be decreased by using the above intermediate layer, it becomes possible to reduce the weight and costs of the liquid sachet package.

The sealant layer forms an internal layer of the liquid sachet package, and is heat-sealed so as to seal the liquid sachet package.

The sealant layer is preferably a layer which mainly includes a low-density ethylene and α-olefin copolymer which is known as LLDPE. The sealant layer is more specifically an ethylene and α-olefin copolymer having a density of preferably 870 kg/m³ to 940 kg/m³ and more preferably 880 kg/m³ to 930 kg/m³. In addition, polyethylene may be preferably included at equal to or less than 50 weight%, and more preferably included at equal to or less than 40 weight% with respect to the entire ethylene and α-olefin copolymer from the viewpoint of improvement of workability and the like. The density of the polyethylene is preferably equal to or less than 910 kg/m³ from the viewpoint of heat-sealing properties.

In the embodiment, the polyethylene is one which is generally classified into a range of types of polyethylene except for above-mentioned ethylene and α-olefin copolymer, which is high-pressure-processed polyethylene, high-density polyethylene, or the like. The polyethylene is particularly preferably high-pressure-processed polyethylene.

The melt flow rate of the polyethylene at 190°C under a load of 2160 g is preferably 0.1 g/10 minutes to 20 g/10 minutes, and particularly preferably 0.5 g/10 minutes to 15 g/10 minutes.

In addition, examples of the α-olefin in the copolymer include propylene, 1-butene, 1-pentene, 1-hexene, 1-octene, 1-decene, 1-dodecene, 4-methyl-1-pentene, and the like. The α-olefin preferably includes 4 to 12 carbon atoms, and particularly preferably includes 5 to 10 carbon atoms.

In the embodiment, the ethylene and α-olefin copolymer preferably has an Mw/Mn of equal to or less than 3.0, and particularly preferably has an Mw/Mn of equal to or less than 2.5.
In addition, in the embodiment, the melt flow rate of the ethylene and α-olefin copolymer at 190°C under a load of 2160 g is preferably 0.1 g/10 minutes to 20 g/10 minutes, and particularly preferably 0.5 g/10 minutes to 15 g/10 minutes.

The copolymer can be obtained by copolymerizing ethylene and an α-olefin using, for example, a catalytic system constituted by a highly active titanium catalyst component including titanium, magnesium, and halogen as essential components and an organic aluminum compound component or a single site catalytic system such as a combination of a metallocene catalyst component and alumoxane.

The thickness of the sealant layer is preferably 5 µm to 50 µm, and more preferably 15 µm to 30 µm. The thickness of the sealant layer is preferably equal to or more than that of the intermediate layer from the viewpoint of the reliability of sealing performances.

The total thickness of the embodiment is preferably equal to or less than 150 µm, and more preferably equal to or less than 100 µm. Meanwhile, the component percentages of the respective layers are preferably 5% to 70% for the base material layer, 5% to 50% for the intermediate layer, and 5% to 50% for the sealant layer when the total thickness of the base material layer, the intermediate layer, and the sealant layer is set to 100%.

An ordinary method can be used as the manufacturing method of the multilayered laminate of the embodiment. For example, the material of the intermediate layer and the material of the sealant layer may be co-extruded using an inflation method or a casting method, and laminated on the base material, thereby forming the intermediate layer and the sealant layer. Particularly, when the intermediate layer and the sealant layer are formed using a casting method at an extrusion speed of a certain speed or more, the intermediate layer comes into contact with the base material in a molten state so as to obtain a sufficient adhesion strength, which is preferable. Specifically, conditions of an extrusion temperature set to 150°C to 250°C, a take-over speed set to equal to or more than 5 m/minute and more preferably 10 m/minute to 600 m/minute, and a withdrawal ratio of 3 to 200 and particularly 5 to 150 are preferably selected.

The multilayered laminate of the embodiment may have arbitrary additives blended into all of the intermediate layer and the sealant layer or into an arbitrary layer. Examples of the additives include an antioxidant, a light stabilizer, a heat stabilizer, an ultraviolet absorber, an antistatic agent, an adhesive, a lubricant, an anti-blocking agent, a pigment, a dye, and the like.

The liquid sachet main body of the embodiment is formed of the multilayered laminate, and preferably has a tearing strength, which is measured based on JIS k7128-1:1998, of equal to or less than 2 N.

### (Filling method)

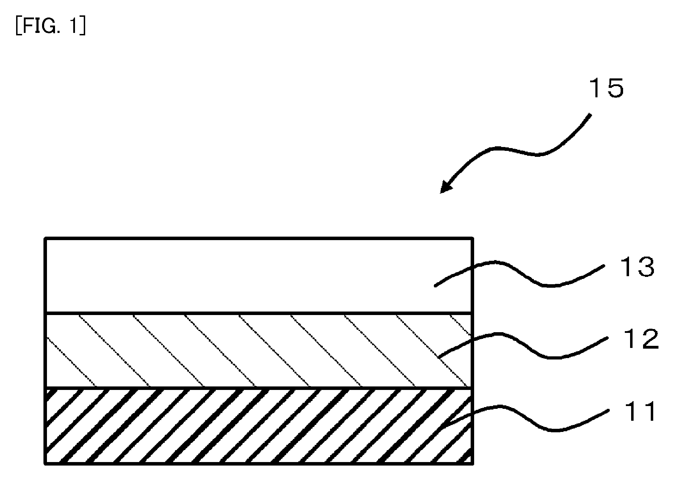

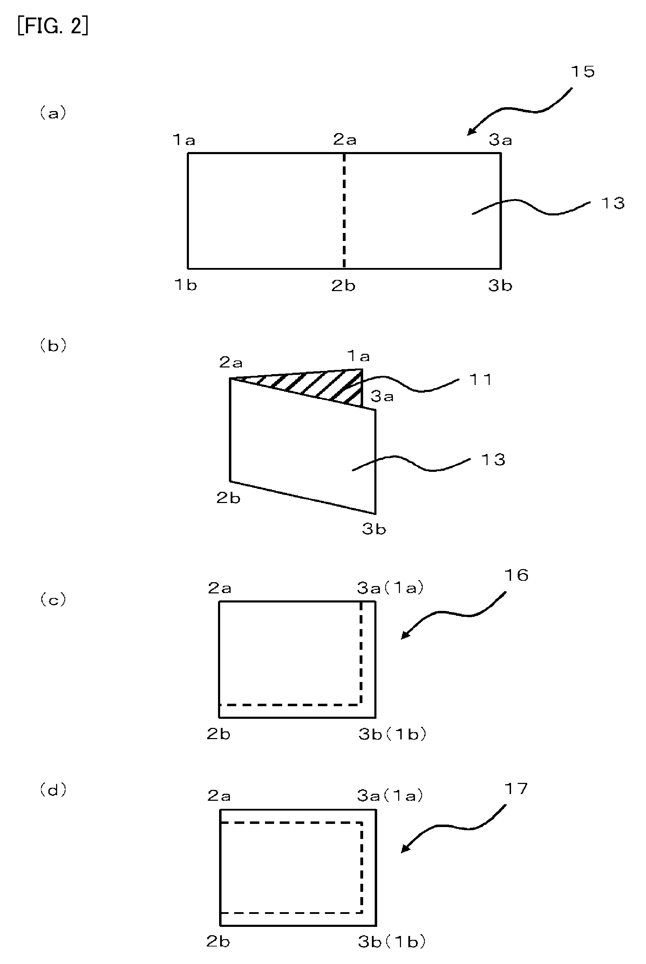

A filling method of the invention will be described using FIGS. 1 and 2.

As shown in FIG. 1, a laminate film 15 has a base material film 13, an intermediate layer 12, and a sealant layer 11 laminated in this order. Firstly, the laminate film 15 is prepared as shown in FIG. 2(a).

Next, as shown in FIG. 2(b), the surface of the sealant layer 11 is bent and made to face each other so as to bend the laminate film 15, and a portion which forms the circumferential edge portion of a liquid sachet package 17 is heat-sealed, thereby forming a liquid sachet main body 16. In more detail, the laminate film 15 is folded with the sealant layer 11 located inside so as to match 1a and 3a, and 1b and 3b in FIG. 2(b), and the side 3a (1a)-3b (1b) (vertical sealing) in FIG. 2 (c) and then the side 2b-3b (1b) (horizontal sealing) are heat-sealed. Thereby, the liquid sachet main body 16 having an opening at the 2a-3a (1a) side in FIG. 2(c) is formed. It should be noted that, generally, the vertical sealing and the horizontal sealing are continuously carried out, but may be separately carried out. In addition, the liquid filling method may be continuous filling or intermittent filling.

Next, as shown in FIG. 2(c), a liquid is filled through the opening of the liquid sachet main body 16. In more detail, the liquid is filled from the 2a-3a (1a) side in FIG. 2(c).

Subsequently, as shown in FIG. 2(d), the heat sealing portion in the opening of the liquid sachet main body 16 filled with the liquid is heat-sealed so as to seal the liquid sachet main body. In more detail, the 2a-3a (1a) side in FIG. 2 (c) is heat-sealed so as to seal the liquid sachet main body, thereby obtaining the liquid sachet package 17.

In the embodiment, the heat sealing conditions are not particularly limited. For example, the pressure can be set to 50 kPa to 700 kPa, the line speed can be set to 5 m/minute to 25 m/minute, and the heat sealing temperature can be set to 80°C to 200°C. In addition, the temperature of contents during filling is not particularly limited. The temperature is preferably 23°C to 90°C from the viewpoint of stability.

The filling temperature range of the embodiment refers to a value obtained using the following method.

### (Method)

Firstly, the thickness of the base material film 13 is made to be 5 µm to 60 µm, the thickness of the intermediate layer 12 is made to be 5 µm to 50 µm, the thickness of the sealant layer 11 is made to be 5 µm to 50 µm, the total thickness is made to be equal to or less than 100 µm, and water at a liquid temperature of 30°C is filled through the opening of the liquid sachet main body 16. Next, the heat-sealing portion in the opening of the liquid sachet main body 16 is heat-sealed at an arbitrary heat-sealing temperature using a DANGAN TYPE-III (manufactured by Taisei Lamick Co., Ltd.) under conditions of a line speed set to 20 m/minute or 25 m/minute, a left pressure of the sealing roll set to 270 kPa, and a right pressure set to 230 kPa. It should be noted that, the heat sealing temperature is changed in intervals of 5°C;
in the heat-sealing portion in the opening of the liquid sachet main body 16, the heat sealing temperature (the upper limit temperature) immediately before bubbles occur and the heat sealing temperature (the lower limit temperature) at which the liquid sachet main body passes a pressure-resistance test in which a load of 100 kgf is applied for 1 minute without leakage and pouch break are measured respectively, and the difference between the upper limit temperature and the lower limit temperature is computed as the filling temperature range (°C).

In the embodiment, the filling temperature range becomes equal to or more than 30°C at both a line speed of 20 m/minute and a line speed of 25 m/minute when the opening portion of the liquid sachet main body 16 is heat-sealed. The filling temperature range is more preferably equal to or more than 32°C, and still more preferably equal to or more than 35°C from the viewpoint of productivity. Since the embodiment has a technical meaning in further widening the lower limit value of the filling temperature range than in the related art, the upper limit value is not particularly limited.

In addition, from the viewpoint of additional improvement in productivity, the difference (ΔT₂₀-ΔT₂₅) between the filling temperature range (ΔT₂₀) when the line speed is set to 20 m/minute and the filling temperature range (ΔT₂₅) when the line speed is set to 25 m/minute is preferably ±10°C or less, and more preferably ±8°C or less.

Wherein, the related art will be described. In the related art, when liquid-phase contents are filled and heat-sealed, if the heat sealing temperature is too high, there were cases in which the filled substance remaining in the heat-sealing portion are heat-sealed together with the sealant layer, expand and release bubbles due to the pressure and heat, thereby causing poor sealing. Meanwhile, when the heat sealing temperature is too low, there were cases in which non-melting portions are generated in the heat-sealing portion such that the sealing strength decreases and liquid leakage occurs. Therefore, the heat sealing temperature was considered to be important as a factor that determines reliability during filling, and there has been a demand for a wider filling temperature range.

Therefore, in the filling method of the embodiment, since the multilayered laminate having a filling temperature range of equal to or more than 30°C at both a line speed of 20 m/minute and a line speed of 25 m/minute is used, favorable heat sealing properties can be stably obtained, whereby the productivity of the liquid sachet package can be improved.

It should be noted that, in the embodiment, the liquid includes liquid, poorly-soluble liquid, liquid including solid-form substances, viscous bodies, and the like as long as the liquid has fluidity so as to fill the liquid sachet package.

It should be noted that, the invention is not limited to the above embodiment, and the invention includes modifications, improvements, and the like within a scope in which the object of the invention can be achieved. In the above embodiment, an example in which one liquid sachet package 17 is manufactured from the laminate film 15 has been described, but a plurality of liquid sachet encasing bodies may be manufactured from one multilayered laminate.

### [Examples]

Hereinafter, the invention will be more specifically described using examples and comparative examples, but the invention is not limited to the examples.

### (Raw materials of the laminate film)

ONy; biaxially-stretched nylon, product name of EMBLEM 15 µm (manufactured by Unitika Limited.)
LLDPE; straight-chain low-density polyethylene, a density of 911 kg/m³, MFR 8.0 g/10 min, (product name: MORETEC, manufactured by Prime Polymer Co., Ltd.)
m-LLDPE; straight-chain low-density polyethylene manufactured through polymerization using a metallocene catalyst, a density of 901 kg/m³, MFR 10.5 g/10 min, (product name: EVOLUE, manufactured by Prime Polymer Co., Ltd.)
m-LLDPE film (A); a straight-chain low-density polyethylene film (30 µm) manufactured through polymerization using a metallocene catalyst (product name: TOHCELLO T.U.X-TCS, manufactured by Mitsui Chemicals Tohcello, Inc.)
m-LLDPE film (B); a straight-chain low-density polyethylene film (30 µm) manufactured through polymerization using a metallocene catalyst (product name: SE605M, manufactured by Tamapoly Co., Ltd.)
Ionomer (A); an ethylene and methacrylic acid copolymer (8.7 mass% of methacrylic acid) Zn 17%-neutralized, MFR 5.5 g/10 min
Ionomer (B); an ethylene and methacrylic acid copolymer (10 mass% of methacrylic acid) Na 35%-neutralized, MFR 2.8 g/10 min
Ionomer (C); an ethylene and methacrylic acid copolymer (15 mass% of methacrylic acid) Zn 23%-neutralized, MFR 5.0 g/10 min
Ethylene copolymer; an ethylene and methacrylic acid copolymer (8.7 mass% of methacrylic acid) MFR 8.2 g/10 min
AC agent; an anchor coating agent, product name of SEIKADYNE 2710 two-component-type (Dainichi Seika Color & Chemical Mtfg. Co., Ltd.)
MFR; melt flow rate at 190°C under a load of 2160 g

### (Manufacturing of the laminate film)

Extrusion laminate working or co-extrusion laminate working was carried out under the following conditions.

| | |
|---|---|
| Apparatus | ; manufactured by Modern Machinery Company |
| Extruder | ; 65 mmΦ L/D=28 |
| Screw | ; 3 stage-type CR=4.78 |
| Die | ; 900 mm-width inner Deckel-type |
| Resin temperature | ; 295°C |
| Process speed | ; 80 m/min |

In addition, for the laminate film, the anchor coating (AC) agent was coated between all of the base material, the intermediate layer, and the sealant layer so that the thickness became 0.2 µm, and an ozone treatment was carried out under conditions of 25 g/m³ and 1 m³/h.

### (Measurement conditions and measurement method of evaluations of the laminate film)

Heat sealing strength (N/ 15 mm) ; 0.2 MPa pressure, 0. 5 seconds of time, and 300 mm/min peeling speed
Pouch break test; a 80×90 mm three side-sealed bag was manufactured with a high-speed liquid filler (DANGAN TYPE-III: manufactured by Taisei Lamick Co., Ltd.) using the obtained laminate film, a pressure was applied to a liquid sachet obtained by filling the bag with 20 ml of water using a manual hydraulic press, and a pressure at which water leakage occurred was observed. The pressure was measured at three points for each sample when the pouch broke, and the average value was used as the pouch break strength (kfg/cm²) of the laminate film.
· Liquid filling appropriateness evaluation; a 80×90 mm three side-sealed bag was manufactured using the obtained laminate film, and a water-filled bag made by filling the bag with 20 ml of water was produced using a high-speed liquid filling machine. The vertical sealing temperature, the pressure, the horizontal sealing pressure, and the filling speed were maintained constant, and a pressure resistance test was carried out on the water-filled bag for one minute under a load of 100 kg, thereby evaluating the filling lower limit temperature (°C). In addition, when a high-temperature horizontal sealing temperature range was evaluated under the same conditions, whether bubbles were generated was visually observed, and the maximum horizontal sealing temperature at which bubbles were not generated was used as the filling upper limit temperature (°C).
· Tearing test (JIS k7128-1: 1998) ; the tearing strength (N) was evaluated using the trouser tearing method with a speed set to 200 mm/min and a chuck interval set to 75 mm.
· Loop stiffness; elastic force (mN) was evaluated using a loop stiffness tester manufactured by Toyo Seiki Co., Ltd.

### (Example 1)

The thickness of the ionomer (A) was set to 10 µm, and the AC agent was coated on the ONy. Next, an extrusion laminate working was carried out through an O₃ treatment. Subsequently, the AC agent was coated on the ionomer (A), an O₃ treatment was carried out so as to make the m-LLDPE 20 µm thick, and an extrusion laminate working was carried out so as to manufacture a laminate film. The obtained laminate film was evaluated. The results were shown in Table 1.

### (Example 2)

The thickness of the ionomer (B) was set to 10 µm, and the AC agent was coated on the ONy. Next, an extrusion laminate working was carried out through an O₃ treatment. Subsequently, the AC agent was coated on the ionomer (B), an O₃ treatment was carried out so as to make the m-LLDPE 20 µm thick, and an extrusion laminate working was carried out so as to manufacture a laminate film. The obtained laminate film was evaluated. The results were shown in Table 1.

### (Example 3)

The thickness of the ionomer (C) was set to 10 µm, and the AC agent was coated on the ONy. Next, an extrusion laminate working was carried out through an O₃ treatment. Subsequently, the AC agent was coated on the ionomer (C), an O₃ treatment was carried out so as to make the m-LLDPE 20 µm thick, and an extrusion laminate working was carried out so as to manufacture a laminate film. The obtained laminate film was evaluated. The results were shown in Table 1.

### (Example 4)

The thickness of the ionomer (A) was set to 20 µm, and the AC agent was coated on the ONy. Next, an extrusion laminate working was carried out through an O₃ treatment. Subsequently, the AC agent was coated on the ionomer (A), an O₃ treatment was carried out so as to make the m-LLDPE 20 µm thick, and an extrusion laminate working was carried out so as to manufacture a laminate film. The obtained laminate film was evaluated. The results were shown in Table 1.

### (Example 5)

The thickness of the ionomer (A) was set to 10 µm, the thickness of the m-LLDPE in the sealant was set to 20 µm, and the AC agent was coated on the ONy. Next, a co-extrusion laminate working was carried out through an O₃ treatment, and a laminate film was manufactured. The obtained laminate film was evaluated. The results were shown in Table 1.

### (Example 6)

The thickness of the ionomer (A) was set to 10 µm, and the AC agent was coated on the ONy. Next, an O₃ treatment was carried out on both surfaces, and a sand extrusion laminate working was carried out on the 30 µm-thick LLDPE film (A) so as to manufacture a laminate film. The obtained laminate film was evaluated. The results were shown in Table 2.

### (Example 7)

The thickness of the ionomer (A) was set to 10 µm, and the AC agent was coated on the ONy. Next, an O₃ treatment was carried out, furthermore, an O₃ treatment was carried out on the opposite surface, and a sand extrusion laminate working was carried out on the 30 µm-thick LLDPE film (B) so as to manufacture a laminate film. The obtained laminate film was evaluated. The results were shown in Table 2.

### (Comparative example 1)

The thickness of the LLDPE was set to 20 µm, and the AC agent was coated on the ONy. Next, an extrusion laminate working was carried out through an O₃ treatment. Subsequently, the AC agent was coated on the LLDPE, an O₃ treatment was carried out so as to make the m-LLDPE 20 µm thick, and an extrusion laminate working was carried out so as to manufacture a laminate film. The obtained laminate film was evaluated. The results were shown in Table 3.

### (Comparative example 2)

The thickness of the ionomer (A) was set to 25 µm, and the AC agent was coated on the ONy. Next, an extrusion laminate working was carried out through an O₃ treatment so as to manufacture a laminate film. The obtained laminate film was evaluated. The results were shown in Table 3.

### (Comparative Example 3)

The thickness of the ethylene copolymer was set to 20 µm, and the AC agent was coated on the ONy. Next, an extrusion laminate working was carried out through an O₃ treatment. Furthermore, the AC agent was coated on the ethylene copolymer. Subsequently, an O₃ treatment was carried out so as to make the m-LLDPE 20 µm thick, and an extrusion laminate working was carried out so as to manufacture a laminate film. The obtained laminate film was evaluated. The results were shown in Table 3.

### (Comparative example 4)

The thickness of the LLDPE was set to 20 µm, and the AC agent was coated on the ONy. Next, a sand extrusion laminate working was carried out on the 30 µm-thick m-LLDPE film (A) so as to manufacture a laminate film. The obtained laminate film was evaluated. The results were shown in Table 3.

### (Comparative example 5)

The thickness of the LLDPE was set to 20 µm, and the AC agent was coated on the ONy. Next, a sand extrusion laminate working was carried out on the 30 µm-thick LLDPE film (B) so as to manufacture a laminate film. The obtained laminate film was evaluated. The results were shown in Table 3.

**[Table 1]**

| | Example 1 | Example 2 | Example 3 | Example 4 | Example 5 |
|---|---|---|---|---|---|
| Base material (µm) | ONy(15) | ONy(15) | ONy(15) | ONy(15) | ONy(15) |
| Surface treatment | AC agent (0.2) +O₃ | AC agent (0.2) +O₃ | AC agent (0.2) +O₃ | AC agent (0.2) +O₃ | AC agent (0.2) +O₃ |
| Intermediate layer (µm) | Ionomer (A) (10) | Ionomer (B) (10) | Ionomer (C) (10) | Ionomer (A) (20) | Ionomer (A) (10)_{*2} |
| Surface treatment | AC agent (0.2) +O₃ | AC agent (0.2) +O₃ | AC agent (0.2) +O₃ | AC agent (0.2) +O₃ | - |
| Sealant layer (µm) | m-LLDPE (20) | m-LLDPE (20) | m-LLDPE (20) | m-LLDPE (20) | m-LLDPE (20)_{*2} |
| Tearing strength (MD/TD) (N) | 0.11/0.12 | 0.11/0.10 | 0.11/0.09 | 0.15/0.18 | 1.05/0.13 |
| Elastic force (MD/TD) (mN) | 3.7/3.6 | n.d. | n.d. | 6.4/5.9 | n.d. |
| Filling upper limit temperature 1 (°C) | 185 | 185 | 175 | 195 | n.d. |
| Filling lower limit temperature 1 (°C) | 125 | 120 | 115 | 140 | n.d. |
| Filling upper limit temperature 2 (°C) | 185 | 185 | 185 | 200 | 180 |
| Filling lower limit temperature 2 (°C) | 130 | 130 | 125 | 140 | 135 |
| Heat sealing strength (N/15 mm)_{*1} | 47 | 48 | 47 | 49 | 34 |
| Breaking strength (kfg/cm²) | 22 Base material cutting | 23 Base material cutting | 23 Base material cutting | 20 Base material cutting | n.d. |
| Total thickness (µm)_{*3} | 45 | 45 | 45 | 55 | 45 |
| Volume reduction effect | ▲18% | ▲18% | ▲18% | 0% | ▲18% |

**[Table 2]**

| | Example 6 | Example 7 |
|---|---|---|
| Base material (µm) | ONy(15) | ONy(15) |
| Surface treatment | AC agent (0.2) +O₃ | AC agent (0.2) +O₃ |
| Intermediate layer (µm) | Ionomer (A) (10) | Ionomer (A) (10) |
| Surface treatment | O₃ | O₃ |
| Sealant layer (µm) | m-LLDPE film (A) (30) | m-LLDPE film (B) (30) |
| Tearing strength (MD/TD) (N) | 0.42/0.24 | 0.21/0.21 |
| Elastic force (MD/TD) (mN) | n.d. | n.d. |
| Filling upper limit temperature 1 (°C) | 185 | 200 |
| Filling lower limit temperature 1 (°C) | 145 | 130 |
| Filling upper limit temperature 2 (°C) | 200 | 200 |
| Filling lower limit temperature 2 (°C) | 155 | 140 |
| Heat sealing strength (N/15 mm)_{*1} | 38 | 45 |
| Breaking strength (kfg/cm²) | 27 Base material cutting | 26 Base material cutting |
| Total thickness (µm)_{*3} | 55 | 55 |
| Volume reduction effect | 0% | 0% |

**[Table 3]**

| | Comparative example 1 | Comparative example 2 | Comparative example 3 | Comparative example 4 | Comparative example 5 |
|---|---|---|---|---|---|
| Base material (µm) | ONy(15) | ONy(15) | ONy(15) | ONy(15) | ONy(15) |
| Surface treatment | AC agent (0.2) +O3 | AC agent (0.2) +O3 | AC agent (0.2) +O₃ | AC agent (0.2) +O₃ | AC agent (0.2) +O₃ |
| Intermediate layer (µm) | LLDPE (20) | Single layer of ionomer (A) (25) | Ethylene copolymer (20) | LLDPE (20) | LLDPE (20) |
| Surface treatment | AC agent (0.2) +O₃ | | AC agent (0.2) +O₃ | O₃ | O₃ |
| Sealant layer (µm) | m-LLDPE (20) | | m-LLDPE (20) | m-LLDPE film (A) (30) | m-LLDPE film (B) (30) |
| Tearing strength (MD/TD) (N) | 5.1/3.3 | 0.07/0.09 | 0.15/0.15 | 0.54/0.97 | 1.17/0.48 |
| Elastic force (MD/TD) (mN) | 4.0/4.4 | 4.8/4.1 | 5.0/4.8 | n.d. | n.d. |
| Filling upper limit temperature 1 (°C) | 170 | 160 | 175 | 165 | 165 |
| Filling lower limit temperature 1 (°C) | 150 | 140 | 140 | 160 | 160 |
| Filling upper limit temperature 2 (°C) | 170 | 160 | 175 | 180 | 175 |
| Filling lower limit temperature 2 (°C) | 150 | 145 | 155 | 170 | 165 |
| Heat sealing strength (N/15 mm)_{*1} | 49 | 22 | 50 | 38 | 45 |
| Breaking strength (kfg/cm²) | 19 Base material cutting | n.d. | 23 Base material cutting | 25 Base material cutting | 28 Base material cutting |
| Total thickness (µm)_{*3} | 55 | 40 | 45 | 65 | 65 |
| Volume reduction effect | 0% | ▲27% | 0% | - | - |

Hereinafter, terminologies and symbols in the tables will be supplementarily described.
n.d.; no data
MD; film flow direction (the extrusion direction in the laminate working of the laminate films)
TD; the vertical direction to the film flow direction
Filling temperature range 1; filling speed of 20 m/min
Filling temperature range 2; filling speed of 25 m/min
*1; heat sealing temperature of 120°C
*2; co-extrusion lamination
*3; the thickness (0.2 µm) of the AC agent was not included.
Base material cutting; the bag was broken due to base material cutting. Therefore, this indicates that the sealing strength is larger than the breaking strength of the base material.
Volume reduction effect; a ratio (%) of the difference of the film total thickness to the film total thickness of Comparative example 1.

This application claims priority based on Japanese Patent Application No. 2010-162020 filed on July 16, 2010, the contents of which are incorporated herein by reference.

## Claims

1. A filling method in which liquid is filled and sealed into a liquid sachet package made of a multilayered laminate having at least three layers in which a base material which forms a surface layer, an intermediate layer, and a sealant layer which forms an internal layer are laminated in the above order, comprising:
a process of forming a liquid sachet package by overlapping the multilayered laminate in a manner in which a surface of the sealant layer is made to face each other, and performing heat-sealing of a portion which forms a circumferential edge portion of the liquid sachet package;
a process of filling liquid through an opening of the liquid sachet package; and
a process of sealing a heat-sealing portion in the opening of the liquid sachet package filled with the liquid through heat sealing,
wherein the intermediate layer is formed using a composition including an ionomer of an ethylene and unsaturated carboxylic acid copolymer, and
a filling temperature range obtained using a method described below becomes equal to or more than 30°C at both a line speed of 20 m/minute and a line speed of 25 m/minute.
(Method)
Under conditions that a thickness of the base material is made to be 5 µm to 60 µm, a thickness of the intermediate layer is made to be 5 µm to 50 µm, a thickness of the sealant layer is made to be 5 µm to 50 µm, a total thickness is made to be equal to or less than 100 µm, water at a liquid temperature of 30°C is filled through the opening of the liquid sachet package, and the heat-sealing portion in the opening of the liquid sachet main body is heat-sealed at an arbitrary heat-sealing temperature using DANGAN TYPE-III (manufactured by Taisei Lamick Co., Ltd.) under conditions of a line speed set to 20 m/minute or 25 m/minute, a left pressure of a sealing roll set to 270 kPa, and a right pressure set to 230 kPa. It should be noted that, a heat sealing temperature is changed in intervals of 5°C; and
in the heat-sealing portion in the opening of the liquid sachet main body, the heat sealing temperature (an upper limit temperature) immediately before bubbles occur and the heat sealing temperature (a lower limit temperature) at which the liquid sachet main body passes a pressure-resistance test in which a load of 100 kgf is applied for one minute without leakage and pouch break are measured respectively, and a difference between the upper limit temperature and the lower limit temperature is computed as a filling temperature range (°C)

2. The filling method according to Claim 1,
wherein a difference (ΔT₂₀-ΔT₂₅) between the filling temperature range (ΔT₂₀) when the line speed is set to 20 m/minute and the filling temperature range (ΔT₂₅) when the line speed is set to 25 m/minute is ±10°C or less.

3. The filling method according to Claim 1 or 2,
wherein a resin that forms the sealant layer is polyethylene having a density of equal to or less than 910 kg/m³.

4. The filling method according to any one of Claims 1 to 3,
wherein a melt flow rate of the intermediate layer at 190°C under a load of 2160 g is 0.1 g/10 minutes to 50 g/10 minutes.

5. The filling method according to any one of Claims 1 to 4,
wherein the resin that forms the sealant layer is a polyethylene having a melt flow rate of 0.1 g/10 minutes to 20 g/10 minutes at 190°C under a load of 2160 g.

6. The filling method according to any one of Claims 1 to 5,
wherein the sealant layer is equal to or more than the intermediate layer in thickness.

7. The filling method according to any one of Claims 1 to 6,
wherein a tearing strength of the liquid sachet package, which is measured based on JIS k7128-1:1998, is equal to or less than 2 N.

8. A manufacturing method of a liquid sachet package,
wherein a filling method according to any one of Claims 1 to 7 is used.

9. A liquid sachet package manufactured using a filling method according to any one of Claims 1 to 7.
